# EUROPEAN PATENT APPLICATION

(11) **EP 2 048 073 A2**
(43) Date of publication of application: **15.04.2009**
(21) Application number: 08017830.4
(22) Date of filing: 10.10.2008
(51) Int. Cl.: B62K 11/04, B62K 19/30, B60K 11/04

(54) **Straddle-type vehicle**

(30) Priority: 10.10.2007 JP 2007264956
(71) Applicant: Yamaha Hatsudoki Kabushiki Kaisha, Iwata-shi, Shizuoka 438-8501 (JP)
(72) Inventor: Iwanaga, Sadamu, Iwata-shi Shizuoka-ken 438-8501 (JP); Shinsho, Masami, Iwata-shi Shizuoka-ken 438-8501 (JP)
(74) Representative: Grünecker, Kinkeldey, Stockmair & Schwanhäusser Anwaltssozietät

(57) **Abstract**

The present invention relates to a straddle-type vehicle comprising: a body frame with a mount surface inclined in vehicle moving direction rearwardly and downwardly; an engine unit mounted to the body frame through an engine bracket having an upper portion thereof mounted to the mount surface of the body frame and having a lower portion thereof mounted to the engine unit; and a radiator device arranged in vehicle moving direction forwardly of the engine unit, wherein at least one section of said radiator device is directly mounted to the engine bracket.

## Description

The present invention relates to a straddle-type vehicle comprising an engine mounted to a body frame through an engine bracket and a radiator device arranged forwardly of the engine.

In, for example, motorcycles mounting thereon a water-cooled engine, it is general that a radiator device for cooling of an engine cooling water is arranged forwardly of an engine, against which a travel wind is liable to strike. As disclosed in JP-UM-A-62-66898, in a conventional construction, a radiator device is mounted to a vehicle body, a pipe member is mounted to an engine bracket, through which an engine is mounted to a body frame, and the radiator device is mounted to the pipe member.

By the way, the conventional construction, in which the radiator device is mounted through the pipe member to the engine bracket, involves a problem that the pipe member resonates due to engine vibrations or the like in some cases and so it is hard to ensure a sufficient support stiffness for the radiator device. The invention has been thought of in view of the conventional situation.

It is an objective of the present invention to provide a straddle-type vehicle capable of heightening a radiator in support stiffness.

According to the present invention, said objective is solved by a straddle-type vehicle comprising: a body frame with a mount surface inclined in vehicle moving direction rearwardly and downwardly; an engine unit mounted to the body frame through an engine bracket having an upper portion thereof mounted to the mount surface of the body frame and having a lower portion thereof mounted to the engine unit; and a radiator device arranged in vehicle moving direction forwardly of the engine unit, wherein at least one section of said radiator device is directly mounted to the engine bracket.

Accordingly, the radiator device is mounted to the engine bracket. The engine bracket is a member, by which the engine is suspended and supported on the body frame, and made high in stiffness. Accordingly, the radiator device is mounted directly to the engine bracket having a high stiffness, so that its support stiffness is high as compared with the case of being mounted through a pipe member or the like. This way, also the space required in front of the engine can be reduced.

Preferably, the inclined mount surface is formed on a lower surface of a front portion of the body frame.

Further, preferably the engine bracket extends substantially vertically to have the upper portion thereof mounted to the mount surface of the body frame and to have the lower portion thereof mounted to a front wall of the engine unit.

Still further, preferably the radiator device is mounted in vehicle moving direction forwardly of and directly to the engine bracket.

According to a preferred embodiment, the body frame includes a head pipe arranged on a front portion thereof to support a steering shaft, and, preferably, the inclined mount surface is substantially flush with a lower end surface of the head pipe.

Preferably, the radiator device is arranged along a front surface of the engine bracket.

Further, preferably the engine bracket is mounted to the body frame and the engine unit by at least one clamp member inserted from the front of the straddle-type vehicle.

Still further, preferably the body frame includes a head pipe arranged on a front portion thereof to support a steering shaft, and, preferably, a longitudinal axis of the clamp member, by which the upper portion of the engine bracket is mounted to the inclined mount surface, is directed substantially parallel to the steering shaft.

Preferably, the engine bracket includes a first bracket portion positioned on one side in a vehicle width direction and a second bracket portion positioned on the other side, and, preferably, the first bracket portion and the second bracket portion are made integral.

Further, preferably the engine bracket comprises a preferably plate-shaped member having an opening.

Still further, preferably the opening comprises a left edge thereof defining the first bracket portion and a right edge thereof defining the second bracket portion.

According to another preferred embodiment, the engine unit includes a front wall portion, preferably of a chain chamber projecting in vehicle moving direction forwardly, and, preferably, the front wall portion is positioned in the opening so as to overlap the engine bracket when viewed from a side of the straddle-type vehicle.

Preferably, the radiator device includes an upper radiator arranged on an upper side and a lower radiator arranged on a lower side.

Further, preferably the upper radiator is mounted to the engine bracket, and/or the lower radiator is mounted to the engine bracket and the engine unit.

Still further, preferably the upper radiator and the lower radiator are connected to each other by a connection, and, preferably, the connection is mounted to the engine bracket.

In the following, the present invention is explained in greater detail by means of embodiments thereof in conjunction with the accompanying drawings, wherein:
- Fig. 1: is a side view showing a motorcycle according to an embodiment;
- Fig. 2: is a side view showing a radiator device arranged on the front surface of an engine bracket of the motorcycle;
- Fig. 3: is a front view showing the radiator device;
- Fig. 4: is a plan view showing an upper radiator of the radiator device;
- Fig. 5: is a left side view showing the radiator device;
- Fig. 6: is a right side view showing the radiator device;
- Fig. 7: is a front view showing the radiator device;
- Fig. 8: is a cross sectional view (cross sectional view taken along the line VIII-VIII in Fig. 5) showing an upper radiator of the radiator device;
- Fig. 9: is a cross sectional view (cross sectional view taken along the line IX-IX in Fig. 5) showing a lower radiator of the radiator device; and
- Fig. 10: is a front view showing the engine bracket.

Among others, the following reference signs are used in the figures:
1: motorcycle (straddle-type vehicle)
2: body frame
2a: head pipe
2a': lower end surface
2e: mount portion (mount surface)
3a: steering shaft
8: engine unit
8j: boss portion (front wall)
8i': front wall portion of chain chamber
9: engine bracket
9a: flange portion (upper portion)
9b: first bracket portion
9c: second bracket portion
9d: connection (lower portion)
9e: opening
14: radiator device
27: joint bolt (clamp member)
28: suspension bolt (clamp member)
30: upper radiator
31: lower radiator
65: intermediate, connecting bolt (connection)
a: front surface of engine bracket

An embodiment will be described below with reference to the accompanying drawings.

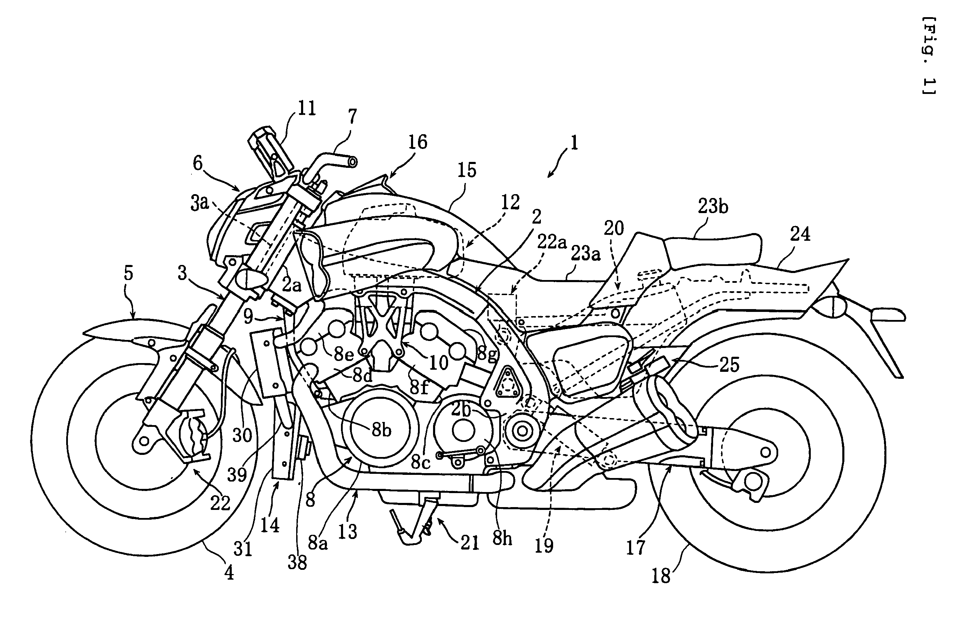

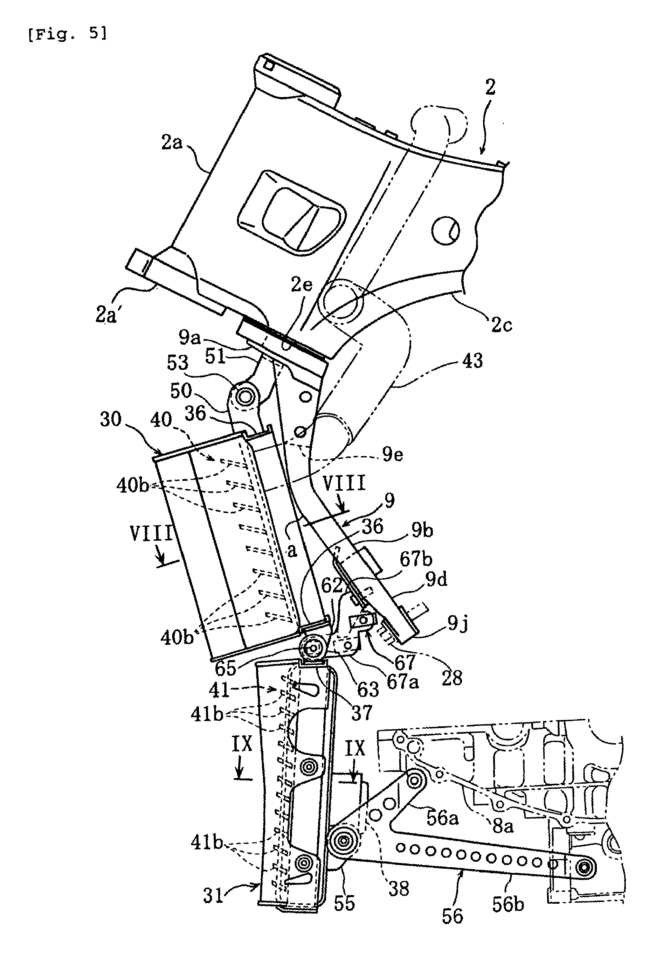

Figs. 1 to 10 are views illustrating a straddle-type vehicle, such as a motorcycle, according to an embodiment. In general, a straddle-type vehicle has a body frame and a seat on which a rider can be seated straddling the body frame when being seated. In addition, front and rear, and left and right referred to in descriptions of the embodiment mean front and rear, and left and right as seen in a state of being seated on a seat unless otherwise specified.

In the drawings, the reference numeral 1 denotes a motorcycle, the motorcycle 1 having the following outline construction. A head pipe 2a positioned at a front end of a body frame 2 journals a steering shaft 3a of a front fork 3 to make the same steerable left and right.

A front wheel 4 is journaled at a lower end of the front fork 3, and an upper portion of the front wheel 4 is covered by a front fender 5, the front fender 5 being mounted to a lower portion of the front fork 3.

Also, the front fork 3 has a headlight device 6 arranged on an upper portion thereof and has a steering handle 7 fixed at an upper end thereof. A circular-shaped meter 11 including a speedometer, a tachometer, etc. is mounted to the headlight device 6 to be positioned forwardly of the steering handle 7.

Also, the body frame 2 suspends and supports an engine unit 8. An intake device 12 and an exhaust device 13 are connected to the engine unit 8 and a radiator device 14 is arranged forwardly of the engine unit 8.

A frame cover 15 arranged on a front portion of the body frame 2 covers the intake device 12 from above and an indicator device 16 representative of a vehicular state is arranged on the frame cover 15.

Also, a side stand 21 is arranged on a left wall lower portion of the engine unit 8 to have the motorcycle 1 uprising in a state of being a little inclined leftward.

Furthermore, left and right, rear arm bracket portions 2b support a rear arm 17 to enable the same to swing vertically and a rear wheel 18 is journaled by a rear end of the rear arm 17. The rear wheel 18 and the front wheel 4 are braked by a hydraulic brake device 22.

A rear-wheel suspension 19 is arranged between the rear arm 17 and the rear arm bracket portions 2b, the rear-wheel suspension 19 comprising a remote type operating characteristics adjustment mechanism 25.

A fuel tank 20 is arranged above the rear-wheel suspension 19. A hydraulic control unit 22a of the brake device 22 is arranged obliquely forwardly of the fuel tank 20.

A straddle-type main seat 23a is arranged to cover upper portions of the hydraulic control unit 22a and the fuel tank 20, and a rear fender 24 that covers the rear wheel 18 from above is arranged below a tandem seat 23b arranged rearwardly of the main seat 23a.

The body frame 2 includes the head pipe 2a, left and right main frame portions 2c extending rearward and obliquely downward while diverging outward in a vehicle width direction from the head pipe 2a, and left and right, rear arm bracket portions 2b being contiguous to rear ends of the left and right main frame portions 2c to extend downward.

A mount surface 2e is formed on lower surfaces of front ends of the left and right main frame portions 2c, 2c close to the head pipe 2a. The mount surface 2e defines an inclined surface inclined rearward and downward and is substantially flush with a lower end surface 2a' of the head pipe 2a.

The engine unit 8 is a water-cooled four-stroke V-type four-cylinder engine. The engine unit 8 has a construction, in which a front cylinder block 8b and a rear cylinder block 8c are formed continuously fore and aft on an upper portion of a crank case 8a to define a predetermined bank angle (about 60 degrees), a front cylinder head 8d and a front head cover 8e are joined to the front cylinder block 8b, and a rear cylinder head 8f and a rear head cover 8g are joined to the rear cylinder block 8c. Also, a transmission case 8h receiving therein a change gear mechanism (not shown) is connected to a rear end of the crank case 8a.

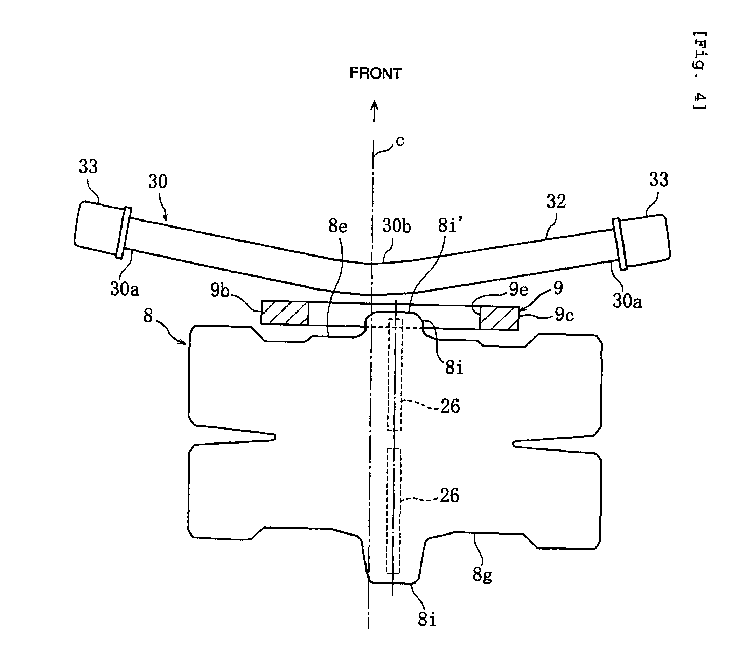

Bulged portions 8i, 8i constituting a chain chamber are formed centrally of the front head cover 8e and the rear head cover 8g in the vehicle width direction to bulge upward and front and rear cam sprockets 26, 26, round which a timing chain (not shown) is wound, are accommodated in the front and rear bulged portions 8i (see Fig. 4).

The engine unit 8 is suspended and supported by an engine bracket 9, left and right suspension brackets 10, 10, and the left and right rear arm bracket portions 2b, 2b.

The engine bracket 9 is made of a plate-shaped member being a casting and includes a wide flange portion 9a mounted to the mount surface 2e formed on the lower surfaces of the front ends of the left and right main frame portions 2c, a first bracket portion 9b extending downward from a left end of the flange portion 9a in the vehicle width direction, a second bracket portion 9c extending downward from a right end, and a triangular-shaped connection 9d for connection of lower ends of the first bracket portion 9b and the second bracket portion 9c. The connection 9d is positioned forwardly of the front cylinder block 8b.

Here, with the engine bracket 9, as viewed from laterally of a vehicle, the flange portion 9a is inclined rearward and downward along the mount surface 2e, the first and second bracket portions 9b, 9c are bent in a dog-legged shape, and the connection 9d is extended downward along a front wall of the cylinder head 8d and the cylinder block 8b.

The engine bracket 9 includes an opening 9e surrounded by the flange portion 9a, the first bracket portion 9b, the second bracket portion 9c, and the connection 9d, and a front wall portion 8i' of the bulged portion 8i of the front head cover 8e is positioned in the opening 9e. The front wall portion 8i' overlaps the first bracket portion 9b and the second bracket portion 9c when seen from laterally of a vehicle.

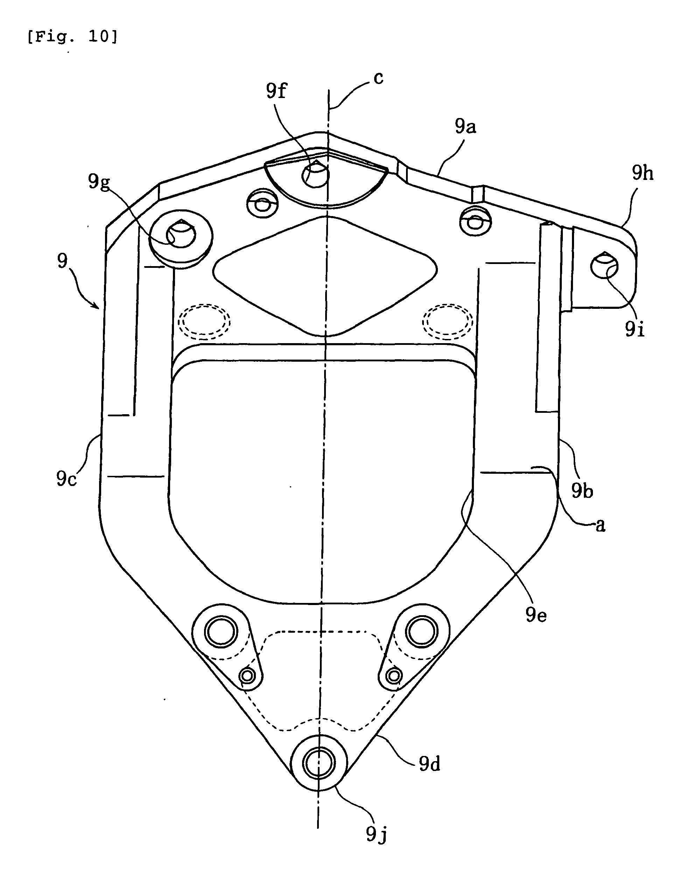

As viewed from the front of a vehicle, formed on the flange portion 9a of the engine bracket 9 are a first bolt hole 9f formed a little offset leftwardly of a center line c of a vehicle body in the vehicle width direction, a second bolt hole 9g formed at a left end of the flange portion 9a in the vehicle width direction, and a third bolt hole 9i formed on a projection 9h projecting outward from a right edge of the flange portion 9a. The second bolt hole 9g and the third bolt hole 9i are arranged to be positioned rearward in this order from the first bolt hole 9f positioned at a front end (see Fig. 10).

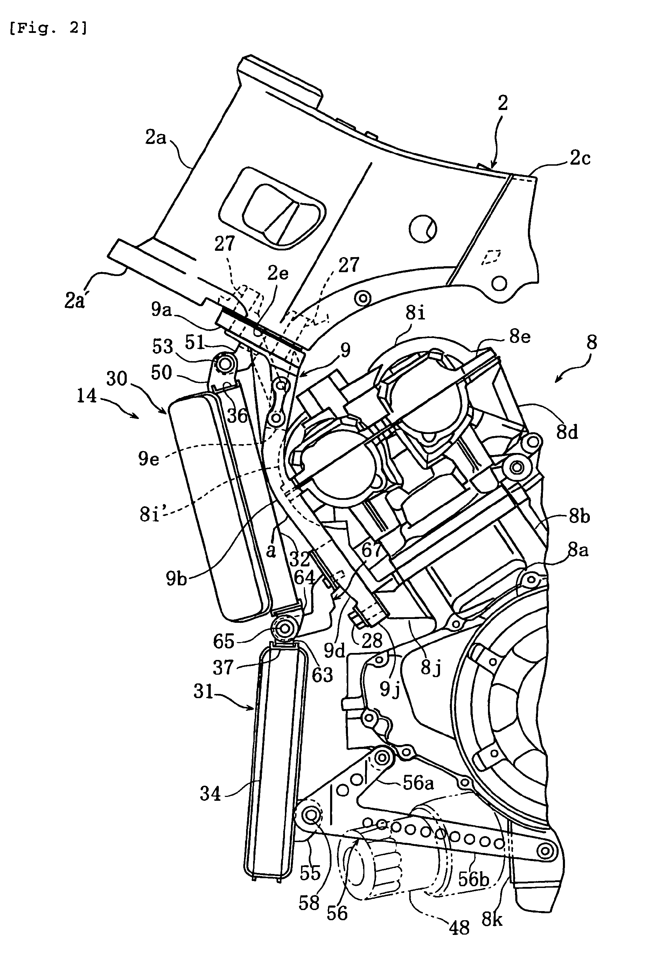

The flange portion 9a of the engine bracket 9 is mounted to the mount surface 2e of the body frame 2 by three joint bolts (clamp members) 27 inserted into the first bolt hole 9f, the second bolt hole 9g, and the third bolt hole 9i from forwardly of and obliquely downwardly of a vehicle (see Figs. 2, 3, and 10).

A forwardly projecting boss portion 8j is formed on the front wall of the front cylinder block 8b and a lower end boss portion 9j of the connection 9d of the engine bracket 9 is mounted to the boss portion 8j by a suspension bolt (clamp member) 28 inserted from the front of a vehicle.

The radiator device 14 includes an upper radiator 30 positioned on an upper side and a lower radiator 31 arranged below the upper radiator 30.

The upper radiator 30 includes a rectangular-shaped upper core portion 32 arranged to cover the front of the engine bracket 9 and to cover the fronts of the front cylinder head 8d and the front head cover 8e and serving to cool an engine cooling water owing to passage of a travel wind, and upper tank portions 33, 33 connected to left and right sides of the upper core portion 32. The upper core portion 32 is mounted to a metallic upper frame member 36 arranged in a manner to surround an outer peripheral surface thereof.

The upper radiator 30 is curved so that left and right sides 30a, 30a are positioned toward the front of a vehicle relative to a central portion 30b as viewed from above, and inclined a little forward as viewed from laterally of a vehicle (see Figs. 2 and 4).

The lower radiator 31 includes a rectangular-shaped lower core portion 34 arranged to cover the front of the crank case 8a, lower tank portions 35, 35 connected to left and right end surfaces of the lower core portion 34, and an electric fan 38 arranged on a left lower portion of a rear surface of the lower core portion 34. The lower core portion 34 is mounted to a metallic lower frame member 37 arranged in a manner to surround an outer peripheral surface thereof.

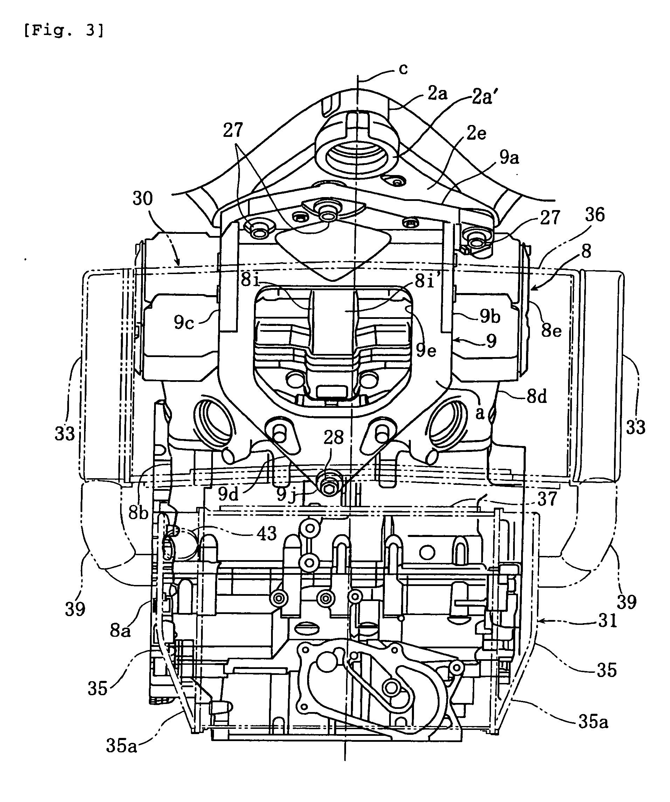

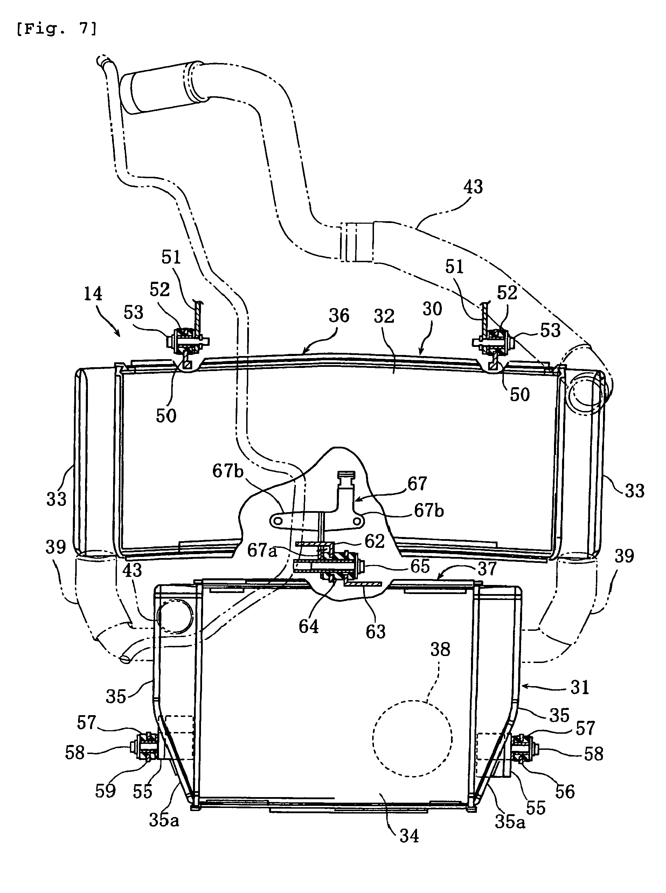

The lower radiator 31 defines a flat surface and is arranged substantially vertical as viewed from laterally. Also, as viewed from the front of a vehicle, the lower radiator 31 is formed to be smaller in vehicle width dimension than the upper radiator 30 and to make lower portions 35a of the left and right, lower tank portions 35 small in vehicle width dimension as they go downward (see Figs. 3 and 7).

The left and right, upper tank portions 33 and the left and right, lower tank portions 35 are connected to each other by left and right, radiator hoses 39, 39. Cooling water hoses 43, 43 connected to the engine unit 8 are connected to the upper tank portions 33 and the lower tank portions 35.

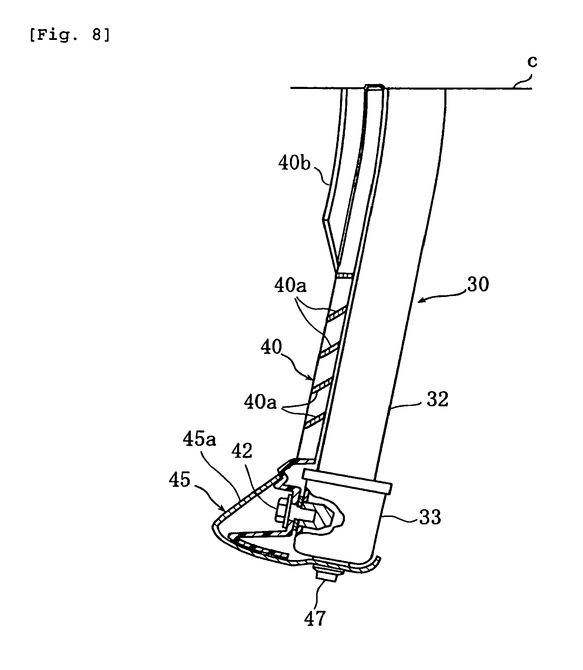

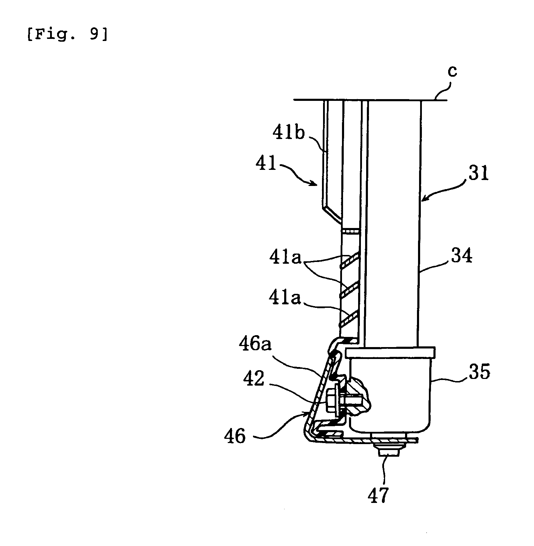

Travel wind guiding members 40, 41 are arranged on front surfaces of the upper core portion 32 and the lower core portion 34, the upper and lower travel wind guiding members 40, 41, respectively, being mounted to the left and right, upper tank portions 33 and the left and right, lower tank portions 35 by mount bolts 42 (see Figs. 8 and 9).

The travel wind guiding member 40 of the upper radiator 30 is formed from a resin and includes a plurality of longitudinal louvers 40a arranged on left and right sides at predetermined intervals in the vehicle width direction to extend vertically, and a plurality of transverse louvers 40b arranged centrally in the vehicle width direction at predetermined intervals in a vertical direction to extend in the vehicle width direction. The travel wind guiding member 41 of the lower radiator 31 is likewise formed from a resin and includes a plurality of longitudinal louvers 41 a and a plurality of transverse louvers 41 b.

The respective, longitudinal louvers 40a, 41 a are arranged outwardly obliquely to be positioned outward toward the front so as to efficiently take in a travel wind from the front left, the right side, or laterally of the front wheel to lead the same to the radiator core portions 32, 34. Also, the respective, transverse louvers 40b, 41 b are arranged upwardly obliquely to efficiently lead a travel wind from the front center, or above the front wheel to the radiator core portions 32, 34.

Also, tank covers 45, 46, respectively, formed from an aluminum alloy are mounted to front sides of the left and right, upper tank portions 33 and the left and right, lower tank portions 35 by fixation bolts 47. The respective tank covers 45, 46 include inner inclined portions 45a, 46a that lead a travel wind to the respective longitudinal louvers 40a, 41 a.

Thereby, a travel wind having passed through the upper core portion 32 is supplied concentratedly round the front cylinder head 8d and a travel wind having passed through the lower core portion 34 is supplied concentratedly round an oil pan 8k connected to a lower surface of the crank case 8a and an oil filter 48 arranged forwardly of the oil pan 8k (see Fig. 2).

The upper radiator 30 is mounted to the engine bracket 9 and the lower radiator 31 is mounted to the engine bracket 9 and the engine unit 8, the radiators specifically having the following construction. It is, in particular, preferable when the upper radiator 30 and/or the lower radiator 31 is/are mounted to the engine bracket 9 directly, i.e. without intermediate support frame or the like.

A pair of left and right, upper, upper stays 50, 50 projecting upward are mounted to an upper surface of the upper frame member 36 of the upper radiator 30. Also, a pair of left and right, upper brackets 51, 51 extending forwardly downward are mounted to the flange portion 9a of the engine bracket 9. The left and right, upper brackets 51 and the left and right, upper, upper stays 50 are mounted together through upper, elastic members 52, 52 by upper connecting bolts 53, 53.

Lower, lower stays 55, 55 projecting rearward are mounted to left and right, lower ends of the lower frame member 37 of the lower radiator 31. Also, left and right mount brackets 56, 59 extending forward are mounted to left and right wall portions of the crank case 8a of the engine unit 8. The left and right mount brackets 56, 59 and the left and right, lower, lower stays 55 are mounted together through lower, elastic members 57, 57 by lower connecting bolts 58, 58.

The left mount bracket 56 is substantially dog-legged in shape to include an upper side portion 56a and a lower side portion 56b being longitudinally larger than the upper side portion 56a, rear ends of the upper side portion 56a and the lower side portion 56b are bolted and fixed to the crank case 8a, and front ends thereof are bolted and fixed to the left, lower, lower stay 55.

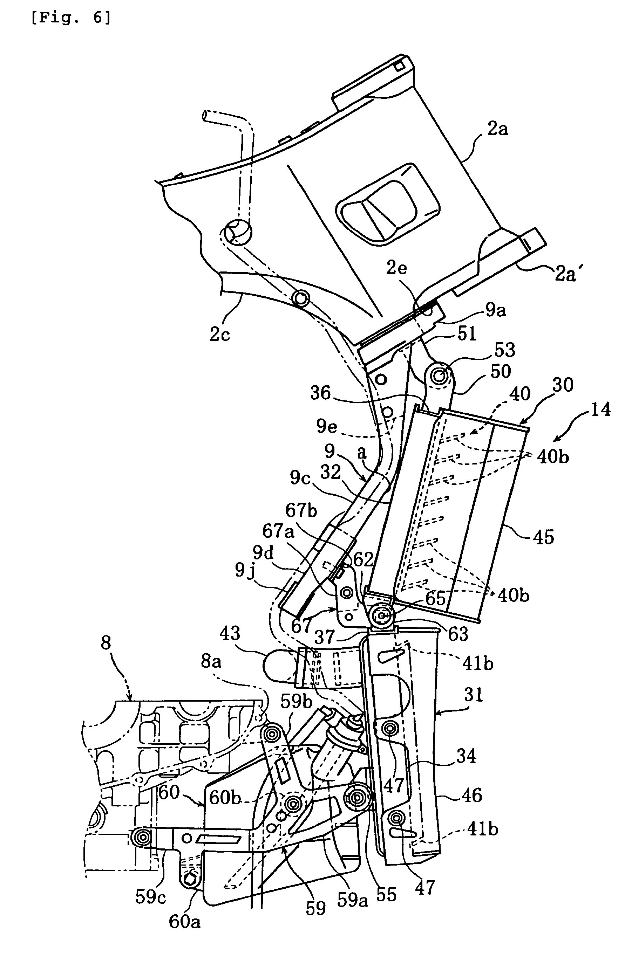

The right mount bracket 59 includes a bracket body 59a, an upper side portion 59b extending upward from the bracket body 59a, and a lower side portion 59c extending rearward, rear ends of the upper side portion 59b and the lower side portion 59c are bolted and fixed to the crank case 8a, and front ends thereof are bolted and fixed to the right, lower, lower stay 55 (Fig. 6).

A recovery tank 60 is mounted to the right mount bracket 59. The recovery tank 60 is arranged inwardly of the mount bracket 59 in the vehicle width direction, a mount piece 60a formed on a rear wall thereof is bolted and fixed to the lower side portion 59c, and the bracket body 59a is bolted and fixed to a nut 60b insert-molded on an outer wall thereof.

A lower, upper stay 62 projecting downward is mounted to a central portion of a lower surface of the upper frame member 36 in the vehicle width direction. Also, an upper, lower stay 63 projecting upward is mounted to a central portion of an upper surface of the lower frame member 37 in the vehicle width direction. The lower, upper stay 62 and the upper, lower stay 63 are mounted together through an intermediate, elastic member 64 by an intermediate, connecting bolt 65.

The intermediate, connecting bolt 65 and the engine bracket 9 are connected to each other by a connecting bracket 67. The connecting bracket 67 includes a longitudinal bracket portion 67a extending vertically and left and right, transverse bracket portions 67b, 67b extending from a rear end of the longitudinal bracket portion 67a in the vehicle width direction. A rear end of the longitudinal bracket portion 67a is mounted to the intermediate, connecting bolt 65 and the left and right, transverse bracket portions 67b are mounted to the connection 9d of the engine bracket 9. Thereby, the upper radiator 30 and the lower radiator 31 are connected to each other by the intermediate, connecting bolt 65, the connecting bolt 65 being mounted to the engine bracket 9 through the connecting bracket 67. For direct fixation to the respective bracket, not only the aforesaid connecting bolts 53,65, but also other connecting means can be used.

According to the embodiment, since the flange portion 9a of the engine bracket 9 extending vertically is mounted to lower surfaces of the front ends 2e of the left and right main frame portions 2c, the connection 9d is mounted to the engine unit 8, and the upper radiator 30 is arranged on a front surface of the engine bracket 9 and mounted to the engine bracket 9, the engine bracket 9 having a high stiffness can support the upper radiator 30 directly, thus enabling improving the upper radiator 30 in support stiffness.

According to the embodiment, since the lower radiator 31 is mounted to the engine bracket 9 and the engine unit 8, the engine bracket 9 and the engine unit 8, which have a high stiffness, can support the lower radiator 31 directly, thus enabling improving the lower radiator 31 in support stiffness.

Also, the mount surface 2e is formed to be inclined rearward and downward and made substantially flush with the lower end surface 2a' of the head pipe 2a, the mount surface 2e of the body frame 2 can posses a sufficient, longitudinal length, thus enabling heightening the engine bracket 9 itself in support stiffness and hence heightening the radiator device 14 in support stiffness.

According to the embodiment, since the flange portion 9a of the engine bracket 9 is mounted to the left and right main frame portions 2c by three joint bolts 27 inserted from the front of a vehicle and the connection 9d is mounted to the engine unit 8 by the suspension bolt 28 inserted from the front of a vehicle, it is possible to mount the engine bracket 9 from the front of a vehicle, thus enabling performing the mounting work readily.

Since the engine bracket 9 includes the first bracket portion 9b positioned on the left in the vehicle width direction and the second bracket portion 9c positioned on the right, and the first bracket portion 9b and the second bracket portion 9c are made integral by the flange portion 9a and the connection 9d, it is possible to ensure a necessary stiffness while making the engine bracket 9 light in weight.

According to the embodiment, since the front wall portion 8i' of the bulged portion 8i, which constitutes a chain chamber of the engine unit 8, is positioned in the opening 9e of the engine bracket 9 and the front wall portion 8i', the first bracket portion 9b and the second bracket portion 9c overlap together when seen in the vehicle width direction, it is possible to rearwardly position the engine bracket 9 and hence the upper radiator 30 according to the overlapping extent. Thereby, it is possible to increase the upper radiator 30 in cooling capacity while eliminating interference with the front fork 3, the front fender 5, the front wheel 4, etc.

Also, it is possible to decrease a center distance of a vehicle according to the overlapping extent and hence to position the engine unit 8 relatively forwardly, so that it is possible to increase a front-wheel load, thus enabling making a whole vehicle favorable in weight balance.

According to the embodiment, since division into the upper radiator 30 and the lower radiator 31 arranged below the upper radiator 30 makes it possible to improve the quality of assembling into a vehicle body while ensuring a necessary cooling capacity.

Also, since the electric fan 38 is arranged on the lower radiator 31 arranged on the lower side, it is possible to arrange the electric fan 38 in an empty space between the lower radiator 31 and the engine unit 8 and hence to position the upper radiator 30 further rearwardly. That is, when the electric fan were arranged on the upper radiator 30, the upper radiator 30 would be positioned forward according to the extent of the electric fan, so that a decrease in cooling capacity is necessary in order to avoid an interference with the front fender 5.

According to the embodiment, since the upper radiator 30 and the lower radiator 31 are connected to each other by the intermediate, connecting bolt 65 and the intermediate, connecting bolt 65 is mounted to the engine bracket 9 through the connecting bracket 67, the connection between the upper radiator 30 and the lower radiator 31 can be increased in strength and the connection can be made simple in structure.

In addition, while the embodiment has been described taking a motorcycle as an example, the present teaching is also applicable to motor tricycles, motor four-wheel cars on which a straddle-type seat is mounted, and straddle-type vehicles for terrain traveling.

The description above discloses (among others) an embodiment of a straddle-type vehicle comprising a body frame, an engine mounted to the body frame through an engine bracket, and a radiator device arranged forwardly of the engine, and wherein a mount surface inclined rearward and downward is formed on a lower surface of a front portion of the body frame, the engine bracket extends vertically to have an upper portion thereof mounted to the mount surface of the body frame and to have a lower portion thereof mounted to a front wall of the engine, and the radiator device is arranged forwardly of and mounted directly to the engine bracket.

Preferably, the body frame includes a head pipe arranged on a front portion thereof to support a steering shaft, and the mount surface is substantially flush with a lower end surface of the head pipe.

Further, preferably the radiator device is arranged along a front surface of the engine bracket.

Further, preferably the engine bracket is mounted to the body frame and the engine by a clamp member inserted from the front of a vehicle.

Further, preferably the body frame includes a head pipe arranged on a front portion thereof to support a steering shaft, and the clamp member, by which an upper portion of the engine bracket is mounted to the mount surface, is directed substantially in parallel to the steering shaft.

Further, preferably the engine bracket includes a first bracket portion positioned on one side in a vehicle width direction and a second bracket portion positioned on the other side, and the first bracket portion and the second bracket portion are made integral.

Further, preferably the engine bracket comprises a plate-shaped member having an opening, and the opening has a left edge thereof defining the first bracket portion and a right edge thereof defining the second bracket portion.

Further, preferably the engine includes a front wall portion of a chain chamber formed in a manner to project forward, and a front wall portion of the engine is positioned in the opening, the front wall portion overlapping the engine bracket as viewed from laterally of a vehicle.

Further, preferably the radiator device includes an upper radiator arranged on an upper side and a lower radiator arranged on a lower side.

Further, preferably the upper radiator is mounted to the engine bracket, and the lower radiator is mounted to the engine bracket and the engine.

Further, preferably the upper radiator and the lower radiator are connected to each other by a connection, and the connection is mounted to the engine bracket.

In order to provide a straddle-type vehicle capable of heightening a radiator in support stiffness, an embodiment of an engine bracket 9 extends vertically to have an upper portion (flange portion) 9a thereof mounted to a front end 2e of a body frame 2 and have a lower portion (connection) 9d thereof suspending a front wall (boss portion) 8j of an engine 8, and an upper radiator 30 is arranged along a front surface of the engine bracket 9 and mounted to the engine bracket 9.

## Claims

1. Straddle-type vehicle comprising:
a body frame (2) with a mount surface (2e) inclined in vehicle moving direction rearwardly and downwardly;
an engine unit (8) mounted to the body frame (2) through an engine bracket (9) having an upper portion (9a) thereof mounted to the mount surface (2e) of the body frame (2) and having a lower portion (9d) thereof mounted to the engine unit (8); and
a radiator device (14) arranged in vehicle moving direction forwardly of the engine unit (8), wherein at least one section of said radiator device (14) is directly mounted to the engine bracket (9).

2. Straddle-type vehicle according to claim 1, wherein the inclined mount surface (2e) is formed on a lower surface of a front portion of the body frame (2).

3. Straddle-type vehicle according to claim 1 or 2, wherein the engine bracket (9) extends substantially vertically to have the upper portion (9a) thereof mounted to the mount surface (2e) of the body frame (2) and to have the lower portion (9d) thereof mounted to a front wall of the engine unit (8).

4. Straddle-type vehicle according to one of claims 1 to 3, wherein the radiator device (14) is mounted in vehicle moving direction forwardly of and directly to the engine bracket (9).

5. Straddle-type vehicle according to one of claims 1 to 4, wherein the body frame (2) includes a head pipe (2a) arranged on a front portion thereof to support a steering shaft (3a), and, preferably, the inclined mount surface (2e) is substantially flush with a lower end surface (2a') of the head pipe (2a).

6. Straddle-type vehicle according to one of claims 1 to 5, wherein the radiator device (14) is arranged along a front surface (a) of the engine bracket (9).

7. Straddle-type vehicle according to one of claims 1 to 6, wherein the engine bracket (9) is mounted to the body frame (2) and the engine unit (8) by at least one clamp member (27,28) inserted from the front of the straddle-type vehicle.

8. Straddle-type vehicle according to claim 7, wherein the body frame (2) includes a head pipe (2a) arranged on a front portion thereof to support a steering shaft (3a), and, preferably, a longitudinal axis of the clamp member (27), by which the upper portion (9a) of the engine bracket (9) is mounted to the inclined mount surface (2e), is directed substantially parallel to the steering shaft (3a).

9. Straddle-type vehicle according to one of claims 1 to 8, wherein the engine bracket (9) includes a first bracket portion (9b) positioned on one side in a vehicle width direction and a second bracket portion (9c) positioned on the other side, and, preferably, the first bracket portion (9b) and the second bracket portion (9c) are made integral.

10. Straddle-type vehicle according to one of claims 1 to 9, wherein the engine bracket (9) comprises a preferably plate-shaped member having an opening (9e).

11. Straddle-type vehicle according to claim 10, wherein the opening (2e) comprises a left edge thereof defining the first bracket portion (9b) and a right edge thereof defining the second bracket portion (9c).

12. Straddle-type vehicle according to one of claims 1 to 11, wherein the engine unit (8) includes a front wall portion (8i'), preferably of a chain chamber projecting in vehicle moving direction forwardly, and, preferably, the front wall portion (8i') is positioned in the opening (9e) so as to overlap the engine bracket (9) when viewed from a side of the straddle-type vehicle.

13. Straddle-type vehicle according to one of claims 1 to 12, wherein the radiator device (14) includes an upper radiator (30) arranged on an upper side and a lower radiator (31) arranged on a lower side.

14. Straddle-type vehicle according to claim 13, wherein the upper radiator (30) is mounted to the engine bracket (9), and/or the lower radiator (31) is mounted to the engine bracket (9) and the engine unit (8).

15. Straddle-type vehicle according to claim 13 or 14, wherein the upper radiator (30) and the lower radiator (31) are connected to each other by a connection (65), and, preferably, the connection (65) is mounted to the engine bracket (9).
